# EUROPEAN PATENT SPECIFICATION

(11) **EP 1 413 156 B1**
(45) Date of publication and mention of the grant of the patent: **05.11.2008**
(21) Application number: 02769965.1
(22) Date of filing: 17.07.2002
(51) Int. Cl.: H04Q 7/28

(54) **CALL SET-UP IN A RADIO COMMUNICATION SYSTEM**
VERBINDUNGSAUFBAU IN EINEM FUNKKOMMUNIKATIONSSYSTEM
ETABLISSEMENT DE COMMUNICATIONS DANS UN SYSTEME DE COMMUNICATION RADIO

(30) Priority: 18.07.2001 GB 0117498
(43) Date of publication of application: 28.04.2004
(73) Proprietor: MOTOROLA, INC., Schaumburg, IL 60196 (US)
(72) Inventor: FENTON, Shaun, Richard, Tadley, Hampshire RG26 5AS (GB); PHILLIPS, Christopher, Frank, Camberley, Surrey GU16 5RF (GB); ROCHFORD, Aidan, Patrick, 9 Dublin 9 (IE)
(74) Representative: McCormack, Derek James
(86) International application number: PCT/EP2002/008074
(87) International publication number: WO 2003/009607

(56) References cited:
- GB-A- 2 287 612
- US-B1- 6 236 649
- COMPAREY R: "DIRECT MODE ON TRUNKING" MOTOROLA TECHNICAL DEVELOPMENTS, MOTOROLA INC. SCHAUMBURG, ILLINOIS, US, vol. 23, 1 October 1994 (1994-10-01), page 15 XP000468363 ISSN: 0887-5286

## Description

### Field of the Invention

This invention relates to the setting up of a call in a radio communication system. The invention is applicable to, but not limited to, the setting up of a conventional call in a trunked radio system.

### Background of the Invention

Wireless communication systems, for example cellular telephony or private mobile radio communication systems, typically provide for radio telecommunication links to be arranged between a plurality of base transceiver stations (BTSs) and a plurality of subscriber units, often termed mobile stations (MSs). The term mobile station generally includes both hand-portable and vehicular mounted radio units.

The communication link from a BTS to an MS is generally referred to as a down-link communication channel. Conversely, the communication link from an MS to a BTS is generally referred to as an up-link communication channel.

Wireless communication systems are distinguished over fixed communication systems, such as the public switched telephone networks (PSTN), principally in that mobile stations move between service providers (and/or different BTS) and in doing so encounter varying radio propagation environments.

In a wireless communication system, each BTS has associated with it a particular geographical coverage area (or cell) . The coverage area defines a particular range over which the BTS can maintain acceptable communications with MSs operating in its serving cell. Often these cells combine to produce an expanded system coverage area, with the infrastructure supporting respective cells interconnected via centralised switching equipment. Furthermore, cells are often grouped into location areas for the purposes of tracking an MS within the coverage area, whilst minimising location-updating signalling.

In a wireless private mobile radio (PMR) communication system, it is known that an MS may operate outside a dedicated network coverage area by communicating in a direct communication link with at least one other MS. Such a communication mode is generally referred to as either direct-mode operation (DMO) (when used in a conjunction with a system supporting trunked mode), conventional, two-way, or back-to-back communication. Hereinafter, the terms direct-mode will be used to describe such communication, with the communication resource defined as a conventional channel that encompasses frequency and/or time-slot configurations.

Such direct communication is in contrast to trunked mode operation (TMO) in a private or public mobile radio (PMR) system that enables the MS to work within a network coverage, with communications controlled and facilitated by a switching and management infrastructure (SwMI). Hence, when an MS operates in a direct mode, there is no system controller and therefore no centralised timing synchronisation or infrastructure-controlled power control to help set up calls, organise communication resource to minimise interference, etc.

In direct-mode, communication links are established in a similar manner as to the direct-mode operation of conventional half duplex radio schemes used by many existing private mobile radio systems such as that of the emergency services. Such calls are set up by a direct-mode (calling) communication unit selecting an address (e.g. 5-tone signalling sequence or digital selective calling) of a receiving (called) communication unit. The called communication unit then is directly contacted to set up a communication link.

A known technique whereby a communication unit can operate in both trunked and direct-mode operation has been defined by the European Telecommunication Standards Institute (ETSI) in the TErrestrial Trunked RAdio (TETRA) standard in ETS-300-396-4. In such a communication system, a communication unit is able to operate in one mode (or communication system), whilst being aware of activity in the other mode (or communication system). This mode of operation is termed 'dual-watch'.

Dual watch operation allows an MS using, say, a direct-mode service to monitor a communication resource of the trunked radio communication system for any incoming signals addressed to the MS. When operating in dual-watch, an MS is capable of being active in a direct-mode communication whilst monitoring a trunking communication resource and vice versa.

In particular, a control channel may be established whereby the system controller of the trunked radio communication system sets up communications for MSs. The control channel may then be monitored by the MS operating in dual-watch or even as a gateway transceiver (mobile repeater).

In summary, a dual-watch MS is capable of monitoring direct-mode channels/resources whilst in trunking mode or trunking communication channels/resources whilst in direct mode.

The dual-watch facility is often used when one or more of the radios in a local direct-mode group is/are within the range of the trunked system. By selectively listening in to the trunked system, it is possible for an MS operating in a DMO group communication to be contacted, if required, by the trunked system. In a similar way, if an MS operating in trunked mode is within range of its DMO talk group, then it is able to perform dual-watch on the DMO talk-group and be included in any calls that are set up accordingly.

Call set-up on a trunked system is achieved by means of signalling with a base transceiver station (BTS) on a trunked control channel (CCH). In contrast, as indicated earlier, call set-up on a conventional channel is achieved by some form of signalling, for example using a 5-tone signalling sequence or digital selective calling, directly between the calling and the called parties, on a conventional channel.

However, in the dual-mode radio scenario, such a direct-mode call set-up approach has a number of disadvantages.

First, for a dual-mode radio to set-up a call on a given conventional channel, the called subscriber unit must be receiving on that conventional channel when the call is set-up. This means that the called subscriber unit must either be a conventional radio, which is tuned permanently to that conventional channel, or a dual-mode radio that is able to operate a background scanning operation of conventional channels while, operating on a trunked control channel.

A significant problem with operating a background scan of conventional channels, whilst operational on a trunked control channel, is that a radio must try to avoid spending too much time away from the control channel. Otherwise the radio may miss important control channel signalling. This effectively means that the conventional background scan will always be very primitive and unable to guarantee the detection of any call set up signalling.

For this reason such background scans have only been used to effectively detect a conventional call that is already in progress. This results in a situation where a conventional call must be continuously identifiable, either by the presence of a carrier, a sub-audible tone or a late entry field, etc. Furthermore, this limitation rules out the possibility of using conventional signalling schemes such as 5-tone where a call is identifiable only at the start of the call set-up, or acknowledged signalling schemes used to improve reliability.

A need therefore exists for a mechanism for setting up a direct-mode call on a radio communication system supporting both trunked and direct (conventional) modes of operation, wherein the abovementioned disadvantages may be alleviated.

Published UK patent applications GB-A-2316271 and GB-A-5 2336070 describe mobiles switching to direct mode communication under the control of the trunked base station. GB-A-2320161 describes a mobile responding to beacon signals, which inform the mobile about the control channel timing. EP-A-0713345 describes two mobiles communicating directly during the unused timeslots in a TDMA trunked control channel.

US-B-6236649 describes a method of establishing a direct call between mobile terminals. A paging sequence is employed by an originating mobile station to enable a directly targeted mobile station to detect synchronization with the originating mobile station by generating a hopping frequency.

The article 'Direct mode on trunking' by R. Comparey published in Motorola Technical Developments (1994) (Document number XP000468363) describes a method in which a subscriber terminal communicating in direct mode sends a signal to a receiver of a trunked communication system to indicate that the direct mode communication is in progress.

### Statement of Invention

In accordance with the present invention in a first aspect there is provided a method of call set-up in a radio communication system offering trunked communication and direct mode communication. The method is as defined in claim 1 of the accompanying claims.

In accordance with the present invention in a second aspect there is provided a communication system, as defined in claim 9 of the accompanying claims.

In accordance with,the present invention in a third aspect there is provided a trunking site controller or base transceiver station as defined in claim 11 of the accompanying claims.

In accordance with the present invention in a fourth aspect there is provided a communication unit as defined in claim 12 of the accompanying claims.

Further features of the invention are defined in the accompanying dependent claims.

In one form, this invention provides a method whereby the signalling path between an MS and its serving ETS (i.e. the control channel signalling) can be used to set up a direct conventional call between two radio communication units (MSs), utilising a standard short data message (SDM) or packet data signalling exchange on a trunked control channel to set up a direct-mode call on a conventional channel.

The calling mobile station (MS) preferably formats the contents of the SDM with a direct-mode call set up command along with details of, say, the selected direct mode channel. The calling MS then addresses the SDM to the called MS(s) and transmits it using the trunked channels, in accordance with the standard SDM protocol employed by the trunked radio system.

After the SDM signalling exchange on the trunked control channel has successfully completed, the calling MS and the called MS(s) re-tune to the conventional channel specified in the SDM and commence the direct-mode call. On clearing down from the direct-mode call, the calling MS and the called MS(s) resume operation on the trunked radio system.

### Brief Description of the Drawings

Exemplary embodiments of the present invention will now be described, with reference to the accompanying drawings, in which:
FIG. 1 shows a block diagram of a single site trunked radio system consisting of a Trunking System Controller/Base station combination (TSC/BTS), adapted in accordance with a preferred embodiment of the present invention. FIG. 1 also shows several MS within the coverage area of the single site trunked radio system.
FIG. 2 shows a timing diagram for a typical SDM signalling exchange occurring on the trunked control channel, used to set up a direct-mode call on a conventional channel in accordance with a preferred embodiment of the present invention.
FIG. 3 shows a flow chart of MS direct-mode call set-up procedure, covering both outgoing and incoming call set-up in accordance with a preferred embodiment of the present invention.
FIG. 4 shows a block diagram of a radio communication unit adapted to support the various inventive concepts of the preferred embodiment of the present invention.

### Description of Preferred Embodiments

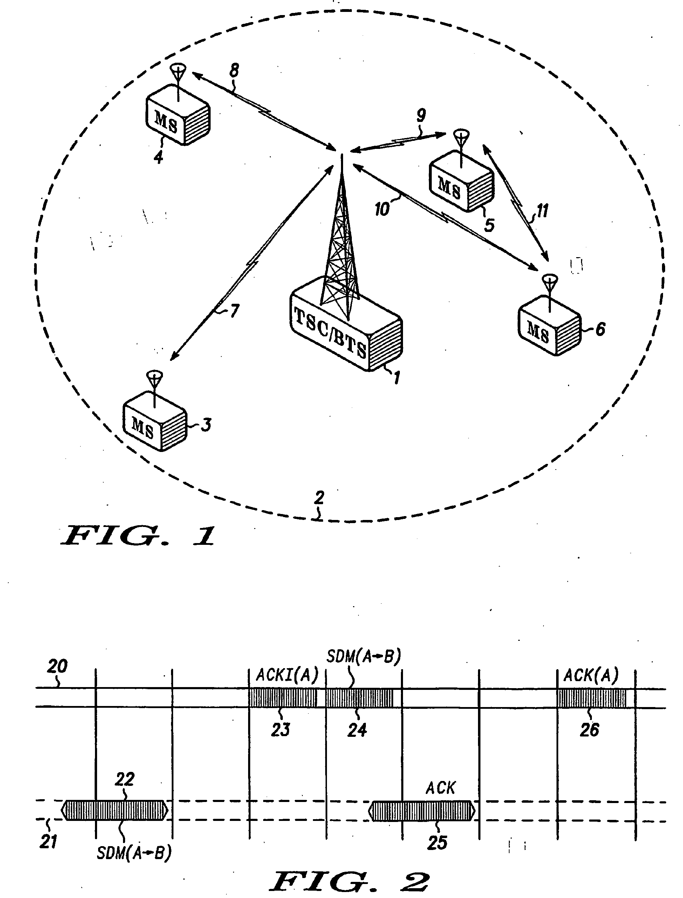

Referring first to FIG. 1, a plurality of subscriber units, such as a mixture of MSs 3-6 and fixed terminals (not shown), communicate with the trunking site controller (TSC)/Base transceiver station (BTS) 1 over an air-interface 7-10. This air-interface consists both of trunked control channels, which are used for signalling purposes, and trunked traffic channels, which are allocated by the TSC/BTS 1 to specific subscriber units for circuit, switched voice and/or data applications.

First, let us consider the case where MS 6 is on the fringe of the trunked radio system coverage area 2, but is still able to communicate with the TSC/BTS 1 on the trunked control channel 10. As shown, the distance between MS 6 and the TSC/BTS 1 is such that the quality of the trunked traffic channel 10 may well be too poor to use. Let us assume that MS 6 is required to set up a call to a second MS, say MS 5.

In accordance with the preferred embodiment of the invention, rather than MS 6 setting up a trunked call via the TSC/BTS 1 in the normal manner, MS 6 instead sets up a direct-mode call using standard SDM signalling on the trunked control channel 10.

When MS 6 is required to call MS 5, it transmits a specific SDM addressed to MS 5 via the TSC/BTS 1. The signalling exchange consists typically of transmission bursts and acknowledgements that occur both on the uplink and the downlink.

Hence, for example where a conventional call from MS 6 to MS 5 is being set-up, bursts will be passed on the uplink 10 from MS 6 to the TSC/BTS 1. Acknowledgements will be passed on the downlink 10 from the TSC/BTS 1 to MS 6.

Similarly, bursts will be passed on the downlink 9 from the TSC/BTS 1 to MS 5. Acknowledgements in this case will be passed on the uplink 9 from MS 5 to the TSC/BTS 1.

Preferably, the SDM contains a direct-mode call set up command along with details of the conventional channel.

Optionally, the SDM may also contain additional call related information (e.g. call duration, call clear down rules, a 5-tone signalling sequence or digital selective calling, transmit rules etc.). MS 6 addresses the SDM to MS 5 and transmits it preferably in accordance with the standard SDM protocol employed by the trunked radio system.

After the SDM signalling exchange, via the uplink trunked control channel 10 and downlink trunked control channel 9, has been successfully completed, MS 6 and MS 5 tune to the selected conventional channel 11, as specified in the SDM. The two MSs are then in a position to commence a direct-mode call. Once the direct-mode call has been completed, MS 6 and MS 5 resume operation on the trunked radio system.

It is within the contemplation of the invention that the direct-mode call set up mechanism described above may also be used in other cases. For example, if MS 4 becomes aware of an emergency conventional call in progress, it may decide to transmit a direct-mode call set-up SDM addressed to a group of MS via the TSC/BTS 1. Subsequently, that group of MS would then join the emergency call.

It is also within the contemplation of the invention that alternative techniques, to the preferred use of an SDM protocol, can be used. For example, a trunked system could set up direct-mode calls using dedicated direct-mode call set-up signalling.

Referring now to FIG. 2, a timing diagram is shown of a preferred implementation of the SDM signalling exchange occurring on the trunked control channel, when used to set up the direct-mode call on a conventional channel.

This signalling exchange is preferably transmitted in accordance with the standard SDM protocol employed by the trunked radio system. It is within the contemplation of the invention that alternative signalling mechanisms can be used to effect the direct-mode call set-up, for example using a paging channel of the trunked system.

Preferably, a continuous carrier is present on the TSC/BTS down-link 20 and MS transmission bursts are shown on the TSC/BTS up-link 21. The first up-link burst to occur 22 is transmitted by the calling MS, hereinafter referred to as MS-A. This burst contains a SDM addressed to the called MS, hereinafter referred to as MS-B. The contents of the SDM primarily contain a command to set up a direct-mode call together with a parameter identifying the selected conventional channel.

The TSC/BTS then transmits an intermediate acknowledgement 23 on the down-link 20 back to MS-A, to confirm that it has successfully received the SDM. In this manner, MS-A is placed in a waiting state, waiting for additional signalling. The TSC/BTS then transmits the SDM 24 on the down-link 20 to MS-B.

MS-B then transmits an acknowledgement 25 on the up-link 21, back to TSC/BTS, to confirm that it has successfully received the SDM, whereupon the TSC/BTS transmits an acknowledgement 26 to MS-A to indicate that the SDM signalling exchange on the trunked control channel has been successfully completed. MS-A and MS-B then tune to the conventional channel and commence a direct-mode conventional call.

The example in FIG. 2 demonstrates a preferred example SDM signalling exchange for an individual direct-mode single site trunked radio system. However, it is within the contemplation of the invention that alternative protocols, including alternative SDM protocols, could benefit from the inventive concepts described herein.

It is within the contemplation of the invention that the inventive concepts could apply equally to multi-site trunked radio systems, where several trunked control channels are employed.

Furthermore, it is within the contemplation of the invention that the inventive concepts could apply equally to group calls, where there are several called MSs. For group calls however, there will be no acknowledgements from the called MS in the SDM signalling exchange of FIG. 2.

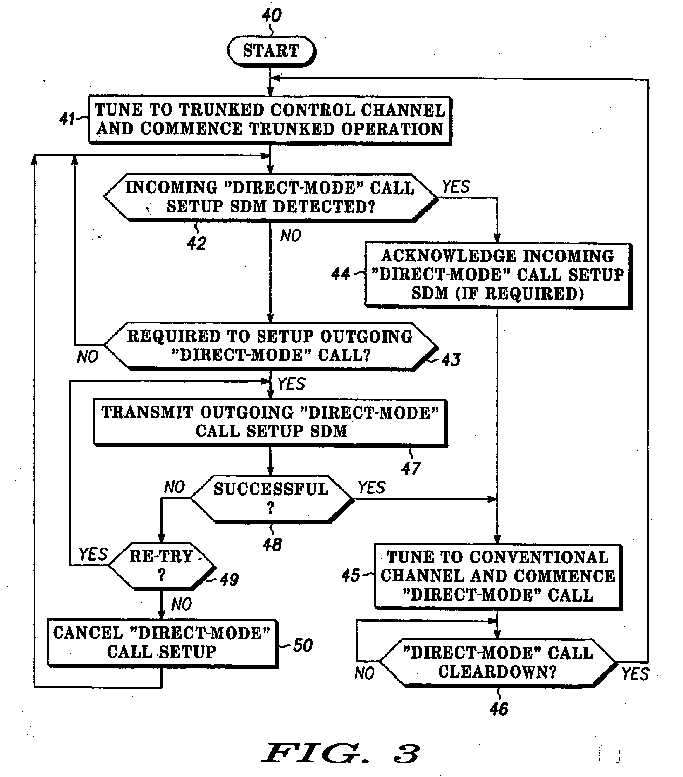

Referring now to FIG. 3, a flow chart of a preferred direct-mode call set up procedure is shown, for both outgoing and incoming calls.

The process starts at step 41 with the MS tuned to the trunked control channel and operating in trunked-mode. Steps 42 and 43 indicate that, for the period when the MS neither receives an incoming direct-mode call set-up SDM, nor is required to set-up an outgoing direct-mode call, then the MS remains operational in the trunked-mode.

However, as shown in step 44, when the MS receives an incoming direct-mode call set-up SDM, and dependent upon the SDM protocol employed by the trunked radio system, the MS may be required to transmit an acknowledgement on the uplink control channel. Whether on not an acknowledgement is transmitted is dependent upon both the SDM protocol and the type of call (i.e. acknowledgements may be required for individual calls but not for group calls).

As indicated in step 45, the MS then tunes to the conventional channel and commences the direct-mode call. The direct-mode call continues until in step 46 the direct-mode call clears down. The MS then re-tunes to the trunked control channel and resumes operating in trunked-mode.

There are several events which may cause the direct-mode call to clear down, examples of which are as follows:
(i) call duration timer expires,
(ii) call cleared down by user, and
(iii) channel inactivity timer expires.

In (iii), it is noteworthy that, when the MS first commences the direct-mode call, the MS may not know whether it is within direct-mode range of the other MS(s) involved in the call. Therefore, if no other activity is detected for a period of time, then recognition of such inactivity may cause the direct-mode call to be cleared down.

For an outgoing direct-mode call set-up, as shown in step 47, an MS that is operating in trunked-mode, is required to set-up an outgoing direct-mode call. This is achieved by transmitting an outgoing direct-mode call set-up SDM. If this is successful then, as shown in step 48, the MS commences a direct-mode call on a conventional channel in a similar manner to that described above.

The criteria for whether a set-up is 'successful' are generally dependent upon the SDM protocol employed by the trunked radio system. However, this normally refers simply to the reception of a positive acknowledgement from the TSC/BTS.

It is within the contemplation of the invention that a back-up mechanism may be employed. For example, should the transmission of the outgoing direct-mode call set-up SDM be unsuccessful, then depending on the SDM protocol employed by the trunked radio system, the MS may be allowed to retransmit the outgoing direct-mode call set-up SDM a number of times before giving up.

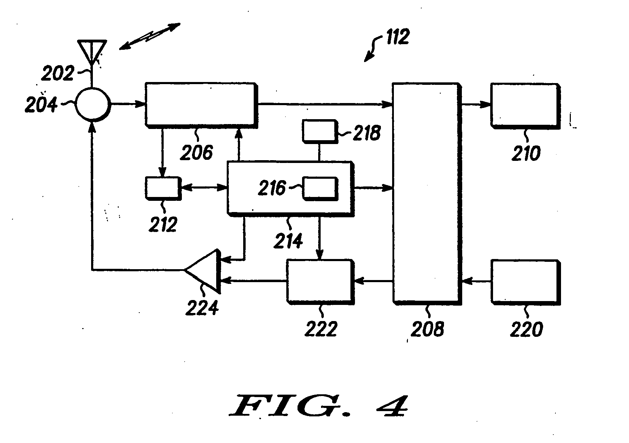

Referring now to FIG. 4, a block diagram of a communication unit subscriber unit/mobile station (MS) 112 adapted to support the inventive concepts of the preferred embodiments of the present invention is shown.

The MS 112 contains an antenna 202 preferably coupled to an antenna switch, duplex filter or circulator 204 that provides isolation between receive and transmit chains within MS 112.

The receiver chain includes scanning receiver front-end circuitry 206 (effectively providing reception, filtering and intermediate or base-band frequency conversion). The scanning front-end circuit 206 scans signal transmissions from its associated BTS and perhaps any direct-mode (DM) /two-way call set-up messages from other MS in its talk group. The scanning front-end circuitry 206 is serially coupled to a signal processing function (processor, generally realised by a DSP) 208.

In accordance with a preferred embodiment of the invention, the receiver chain 210, in particular the signal processing function 208, coupled to the scanning front-end circuit 206, has been adapted for a receiving MS to receive and process short data messages or packet data messages. The messages are received on the trunked control channel and contain direct-mode call set-up requests, conventional channel information and the like as indicated previously. In this manner, the MS 112 can switch to a conventional channel to enter into a direct communication with a second MS.

A controller 214 is operably coupled to the scanning front-end circuitry 206 so that the receiver can calculate receive bit-error-rate (BER) or frame-error-rate (FER) or similar link-quality measurement data from recovered information via a received signal strength indication (RSSI) 212 function. The RSSI 212 function is operably coupled to the scanning front-end circuit 206. By obtaining link-quality measurement data, the MS can determine whether it is within range of its serving BTS or neighbouring BTS.

In addition, an MS is unable to detect whether it is within range of other MSs, perhaps in its group, when it attempts to set up a call. When the call is set up, if there is no activity detected from the called MS, then a calling MS can assume that it is not in range and can time-out from the call.

The memory device 216 stores a wide array of MS-specific data, such as decoding/encoding functions, neighbour and serving cell information relating to timing, frequency channels - conventional and trunked, a 5-tone signalling sequence or digital selective calling method, call clear-down rules, transmit rules and the like. Furthermore, link quality measurement information may be stored to enable an optimal communication link to be selected.

A timer 218 is operably coupled to the controller 214 to control the timing of operations, namely the transmission or reception of time-dependent signals, within the MS 112.

As known in the art, received signals that are processed by the signal processing function are typically input to an output device 210, such as a speaker or visual display unit (VDU) .

In the context of the preferred embodiment of the present invention, timer 218 and scanning front-end circuit 206 are used to synchronize the MS 112 to the frequency and timing of the selected conventional channel if they are the called party.

As regards the transmit chain, this essentially includes an input device 220, such as a microphone, coupled in series through the signal processor 208, transmitter/modulation circuitry 222 and a power amplifier 224. The processor 208, transmitter/modulation circuitry 222 and the power amplifier 224 are operationally responsive to the controller, with an output from the power amplifier coupled to the duplex filter or circulator 204, as known in the art.

The transmit chain in MS 112 has been adapted to request that a call be set up on a new conventional channel, if circumstances and call quality with another MS require. Such a request is made by transmitting an SDM on the control channel uplink of the trunked system, as described above.

In the context of the preferred embodiment of the present invention, processor 208, timer 218 in conjunction with transmitter/modulation circuitry 222 are used to synchronize the MS 112 to the control frequency and timing of the trunking system in order to transmit the request for a selected conventional channel when the MS is the calling party.

The signal processor function 208 in the transmit chain may be implemented as distinct from the processor in the receive chain. Alternatively, a single processor 208 may be used to implement the processing of both transmit and receive signals, as shown in FIG. 4.

It is within the contemplation of the invention that the MS 112 may be re-programmed to receive and process short data messages or packet data messages adapted as described above. More generally, according to the preferred embodiment of the present invention, such re-programming may be implemented in a respective communication unit in any suitable manner. For example, a new memory chip may be added to a conventional communication unit, or alternatively existing parts of a conventional communication unit may be adapted, for example by reprogramming one or more processors therein. As such the required adaptation may be implemented in the form of processor-implementable instructions stored on a storage medium, such as a floppy disk, hard disk, PROM, RAM or any combination of these or other storage multimedia.

Of course, the various components within the MS 112 can be realised in discrete or integrated component form. Furthermore, it is within the contemplation of the invention that MS 112 may be one of a mobile phone, a portable or mobile PMR radio, a personal digital assistant, a lap-top computer or a wirelessly networked PC that requires access to the communication system.

It will be understood that the call set-up procedure on a trunked system described above provides at least the following advantages:
(i) a packet data protocol supported by the given trunked system can be used to set up calls on conventional channels;
(ii) the call set-up procedure takes advantage of the packet data signalling protocol to ensure a reliable call set up;
(iii) offers the advantage of the trunked system controller multi-site operation to set up calls to radios that may be operational on any one of a number of different control channels;
(iv) does not require the called subscriber unit to waste time scanning conventional channels;
(v) does not require the called subscriber unit to be a dedicated conventional radio fixed on a given conventional channel;
(vi) the proposed mechanism is fully backward compatible with a standard trunked call set-up mechanism (i.e. it allows the calling radio to choose whether to use the standard trunked call set-up mechanism or the mechanism defined by this invention);
(vii) ensures that the calling radio(s) are present in the call at the beginning of the call rather than after the call has started, as would be the prior art case of a background conventional channel scan mechanism; and
(viii) in the case where a conventional channel is being used to handle an emergency call, the proposed mechanism can be used to introduce trunked radios into the call so that trunked radios can operate alongside conventional radios on a conventional channel.

In summary, a method of call set-up on a radio communication system offering trunked communication and conventional two-way communication has been described. The method includes the step of requesting on a trunked signalling channel, by a first communication unit, a conventional traffic channel for communicating with a second communication unit. The method further includes the step of re-tuning the first communication unit and second communication unit to the conventional traffic channel to enter into a two-way call.

Furthermore, a dual-mode radio communication system providing trunked communication and conventional two-way communication has been described. The communication system includes a plurality of dual-mode communication units capable of operating in a trunked mode and a conventional mode of operation. A trunked signalling channel provides a signalling resource, wherein the signalling resource includes a short data message or packet data message or dedicated direct-mode call set up signalling scheme for use by a dual-mode communication unit to request a conventional traffic channel for communicating with a second communication unit.

Thus, a mechanism for setting up a direct-mode call on a trunked system has been provided wherein the abovementioned disadvantages associated with prior art arrangements have been substantially alleviated.

## Claims

1. A method of call set-up in a radio communication system offering trunked mode communication (7-10) and direct mode communication (11), the method comprising the steps of:
(i) a first communication unit (6) sending a call set-up communication to a second communication unit (5) to establish a direct mode call with the second communication unit (5) on a direct mode traffic channel, and
(ii) the first communication unit (6) and the second communication unit (5) tuning to the direct mode traffic channel (11) to enter into the direct mode call, the method being **characterized by**:
the first communication unit (6) transmitting the call set-up communication on an uplink trunked mode control channel (10) to a base station (1) of the system and the base station transmitting the call set-up communication on a downlink trunked mode control channel (9) to the second communication unit, wherein the call set-up communication (22) is made using a short data message or a dedicated packet data message or dedicated direct-mode call set up message using a signalling scheme of the trunked system.

2. The method according to claim 1 including the first communication unit sending the call set-up communication when it is operating on a fringe of the coverage area of the base station.

3. The method according to claim 1 or claim 2 wherein the direct mode call is a group call and the method includes the call set-up communication being sent to a plurality of called communication units via the base station.

4. The method according to any one of the preceding claims including the base station upon receiving the call set-up communication (22) on the uplink control channel sending an intermediate acknowledgement (23) on a downlink control channel to confirm that it has successfully received the call set-up communication and the first communication unit being placed in a waiting state in which it is waiting for additional signalling.

5. The method according to any one of the preceding claims including (i) the second communication unit (5) transmitting (25) on an uplink control channel (10) to the base station (1) an acknowledgement that it has sucessfully received the call set-up communication; (ii) the base station transmitting (26) the acknowledgement (26) on a downlink control channel to the first communication unit (6) to indicate that a signalling exchange has been successfully completed; and (iii) the first communication unit tuning to the direct mode traffic channel upon receiving the acknowledgement (26) from the base station.

6. The method according to any one of the preceding claims, wherein the short data message (22) or packet data message or dedicated direct-mode call set up message includes an address of the second communication unit, a direct mode call set up command, and a parameter identifying a selected direct mode channel.

7. The method according to claim 3, wherein the call set-up communication includes at least one of the following:
call duration, call clear down rules, a 5-tone signalling sequence or digital selective calling, transmit rules.

8. The method according to any one of the preceding claims, wherein the call set-up communication is transmitted in accordance with a standard short data message protocol employed by the trunked radio system.

9. The method according to any one preceding claim, the method further comprising the step of:
returning, by the first and second communication units, to operation on the trunked radio system upon clear down of the direct mode call.

10. A radio communication system including a base station (1), a first communication unit (6) operable to send a call set-up communication to a second communication unit (5) to establish a direct mode call with the second communication unit (5) on a direct mode traffic channel and to tune to the direct mode traffic channel when the call is established, and a second communication unit operable to receive the call set-up communication from the first communication unit (6) and to tune to the direct mode traffic channel when the call is established; and **characterized in that** the first communication unit (6) is operable to transmit the call set-up communication on an uplink trunked mode control channel (10) to the base station (1); the base station is operable to transmit the call set-up communication on a downlink trunked mode control channel (9) to the second communication unit, and the second communication unit is operable to receive the call set-up communication on the downlink trunked mode control channel; wherein the first communication unit is operable to transmit the call set-up communication (22) using a short data message or a dedicated packet data message or dedicated direct-mode call set up message using a signalling scheme of the trunked system.

11. A radio communication system according to claim 10, wherein the first communication unit is operable to transmit the call set-up communication in accordance with a standard short data message protocol employed by the trunked radio system.

12. A trunking site controller or base transceiver station (1) operable to receive a call set-up communication from a first communication unit (6) on an uplink control channel and to send the call set-up communication to a second communication unit (5) on a downlink control channel; **characterized in that** the trunking site controller or base transceiver station is operable to receive from the first communication unit on the uplink control channel a call set-up communication to establish a direct mode call with the second communication unit (5) on a direct mode traffic channel, the call set-up communication using a short data message (22) or a dedicated packet data message or dedicated direct-mode call set up message using a signalling scheme of the trunked system, and that the trunking site controller or base transceiver station is operable to send the call set-up communication to the second communication unit on a downlink control channel.

13. A first communication unit (6) operable to send a call set-up communication to a second communication unit (5) to establish a direct mode call with the second communication unit (5) on a direct mode traffic channel, and
operable to tune (45) to the direct mode traffic channel (11) to enter into the direct mode call, **characterized in that:**
the first communication unit (6) is operable to transmit the call set-up communication on an uplink trunked mode control channel (10) to a base station or trunking site controller (1) operating in a trunked mode for sending by the base station or trunking site controller (1) to the second communication unit on a downlink control channel, wherein the first communication unit is operable to transmit the call set-up communication using a short data message (22) or a dedicated packet data message or dedicated direct-mode call set up message using a signalling scheme of the trunked system in which the base station or trunking site controller (1) operates.

14. The first communication unit (6) according to claim 13, wherein the communication unit is a mobile phone, a portable or mobile PMR radio, a personal digital assistant, a lap-top computer or a wirelessly networked personal computer.

## Patentansprüche

1. Verfahren zum Verbindungsaufbau in einem Funkkommunikationssystem, das eine Bündelfunkbetriebsartkommunikation (7-10) und eine Direktbetriebsartkommunikation (11) ermöglicht, wobei das Verfahren die folgenden Schritte umfasst:
(i) Senden einer Verbindungsaufbaukommunikation durch eine erste Kommunikationseinheit (6) zu einer zweiten Kommunikationseinheit (5), um einen Direktbetriebsartanruf mit der zweiten Kommunikationseinheit (5) auf einem Direktbetriebsartverkehrskanal einzurichten, und
(ii) Einstellen der ersten Kommunikationseinheit (6) und der zweiten Kommunikationseinheit (5) auf den Direktbetriebsartverkehrskanal (11), um in den Direktbetriebsartanruf einzutreten, wobei das Verfahren **dadurch gekennzeichnet ist, dass**:
die erste Kommunikationseinheit (6) die Verbindungsaufbaukommunikation auf einem Uplink-Bündelfunkbetriebsartsteuerkanal (10) zu einer Basisstation (1) des Systems überträgt und die Basisstation die Verbindungsaufbaukommunikation auf einem Downlink-Bündelfunkbetriebsartsteuerkanal (9) zu der zweiten Kommunikationseinheit überträgt, wobei die Verbindungsaufbaukommunikation (22) während einer SMS oder einer dedizierten Datennachricht oder einer dedizierten Direktbetriebsartverbindungsaufbaunachricht unter Verwendung eines Signalisierungsschemas des Bündelfunksystems durchgeführt wird.

2. Verfahren gemäß Anspruch 1, das umfasst, dass die erste Kommunikationseinheit die Verbindungsaufbaukommunikation sendet, wenn sie in einer Randzone des Versorgungsbereichs der Basisstation arbeitet.

3. Verfahren gemäß Anspruch 1 oder Anspruch 2, wobei der Direktbetriebsartanruf ein Gruppenanruf ist und das Verfahren umfasst, dass die Verbindungsaufbaukommunikation über die Basisstation an eine Mehrzahl von angerufenen Kommunikationseinheiten gesendet wird.

4. Verfahren gemäß einem der vorangehenden Ansprüche, das umfasst, dass die Basisstation nach einem Empfangen der Verbindungsaufbaukommunikation (22) auf dem Uplink-Steuerkanal eine Zwischenbestätigung (23) auf einem Downlink-Steuerkanal sendet, um zu bestätigen, dass sie die Verbindungsaufbaukommunikation erfolgreich empfangen hat, und dass die erste Kommunikationseinheit in einen Wartezustand versetzt wird, in dem sie auf eine zusätzliche Signalisierung wartet.

5. Verfahren gemäß einem der vorangehenden Ansprüche, das umfasst: (i) dass die zweite Kommunikationseinheit (5) auf einem Uplink-Steuerkanal (10) eine Bestätigung zu der Basisstation (1) überträgt (25), dass sie die Verbindungsaufbaukommunikation erfolgreich empfangen hat; (ii) dass die Basisstation die Bestätigung (26) auf einem Downlink-Steuerkanal zu der ersten Kommunikationseinheit (6) überträgt (26), um anzuzeigen, dass ein Signalisierungsaustausch erfolgreich abgeschlossen worden ist; und (iii) dass sich die erste Kommunikationseinheit nach einem Empfangen der Bestätigung (26) von der Basisstation auf den Direktbetriebsverkehrskanal einstellt.

6. Verfahren gemäß einem der vorangehenden Ansprüche, wobei die SMS (22) oder Paketdatennachricht oder dedizierte Direktbetriebsartverbindungsaufbaunachricht eine Adresse der zweiten Kommunikationseinheit, einen Direktbetriebsartverbindungsaufbaubefehl und einen Parameter, der einen ausgewählten Direktbetriebsartkanal identifiziert, umfasst.

7. Verfahren gemäß Anspruch 3, wobei die Verbindungsaufbaukommunikation umfasst: Anrufdauer, Anrufauslösungsregeln, eine 5-Tonsignalisierungssequenz oder ein digitaler selektiver Anruf und/oder Senderegeln.

8. Verfahren gemäß einem der vorangehenden Ansprüche, wobei die Anrufaufbaukommunikation gemäß einem SMS-Standardprotokoll übertragen wird, das durch das Bündelfunksystem eingesetzt wird.

9. Verfahren gemäß einem der vorangehenden Ansprüche, wobei das Verfahren weiterhin die folgenden Schritte umfasst: Zurückkehren der ersten und der zweiten Kommunikationseinheit zu einem Betrieb in dem Bündelfunksystem nach einer Auslösung des Direktbetriebsartanrufes.

10. Funkkommunikationssystem, das umfasst: eine Basisstation (1), eine erste Kommunikationseinheit (6), die betreibbar ist, um eine Verbindungsaufbaukommunikation an eine zweite Kommunikationseinheit (5) zu senden, um einem Direktbetriebsartanruf mit der zweiten Kommunikationseinheit (5) auf einem Direktbetriebsartverkehrskanal einzurichten und sich auf den Direktbetriebsartverkehrskanal einzustellen, wenn der Anruf eingerichtet ist, und eine zweite Kommunikationseinheit, die betreibbar ist, um die Verbindungsaufbaukommunikation von der ersten Kommunikationseinheit (6) zu empfangen und sich auf den Direktbetriebsartverkehrskanal einzustellen, wenn der Anruf eingerichtet ist; und **dadurch gekennzeichnet ist, dass**: die erste Kommunikationseinheit (6) betreibbar ist, um die Verbindungsaufbaukommunikation auf einem Uplink-Bündelfunkbetriebsartsteuerkanal (10) zu der Basisstation (1) zu übertragen; die Basisstation betreibbar ist, um die Verbindungsaufbaukommunikation auf einem Downlink-Bündelfunkbetriebsartsteuerkanal (9) zu der zweiten Kommunikationseinheit zu übertragen, und die zweite Kommunikationseinheit betreibbar ist, um die Verbindungsaufbaukommunikation auf dem Downlink-Bündelfunkbetriebsartsteuerkanal zu empfangen; wobei die erste Kommunikationseinheit betreibbar ist, um die Verbindungsaufbaukommunikation (22) unter Verwendung einer SMS oder einer dedizierten Paketdatennachricht oder einer dedizierten Direktbetriebsartverbindungsaufbaunachricht unter Verwendung eines Signalisierungsschemas des Bündelfunksystems zu übertragen.

11. Funkkommunikationssystem gemäß Anspruch 10, wobei die erste Kommunikationseinheit betreibbar ist, um die Verbindungsaufbaukommunikation gemäß einem SMS-Standardprotokoll, das durch das Bündelfunksystem eingesetzt wird, zu übertragen.

12. Bündelfunkseitensteuerung oder Basistransceiverstation (1), die betreibbar ist, um eine Verbindungsaufbaukommunikation von einer ersten Kommunikationseinheit (6) auf einem Uplink-Steuerkanal zu empfangen und die Verbindungsaufbaukommunikation auf einem Downlink-Steuerkanal an eine zweite Kommunikationseinheit (5) zu senden; **dadurch gekennzeichnet, dass** die Bündelfunkseitensteuerung oder Basistransceiverstation betreibbar ist, um von der ersten Kommunikationseinheit auf dem Uplink-Steuerkanal eine Verbindungsaufbaukommunikation zu empfangen, um einen Direktbetriebsartanruf mit der zweiten Kommunikationseinheit (5) auf einem Direktbetriebsartverkehrskanal einzurichten, wobei die Verbindungsaufbaukommunikation eine SMS (22) oder eine dedizierte Paketdatennachricht oder eine dedizierte Direktbetriebsartverbindungsaufbaunachricht unter Verwendung eines Signalisierungsschemas des Bündelfunksystems verwendet, und dass die Bündelfunkseitensteuerung oder Basistransceiverstation betreibbar ist, um die Verbindungsaufbaukommunikation auf einem Downlink-Steuerkanal an die zweite Kommunikationseinheit zu senden.

13. Erste Kommunikationseinheit (6), die betreibbar ist, um eine Verbindungsaufbaukommunikation an eine zweite Kommunikationseinheit (5) zu senden, um einen Direktverbindungsanruf mit der zweiten Kommunikationseinheit (5) auf einem Direktverbindungsverkehrskanal einzurichten, und betreibbar ist, um sich auf den Direktbetriebsartverkehrskanal (11) einzustellen (45), um in den Direktbetriebsartanruf einzutreten, **dadurch gekennzeichnet, dass:**
die erste Kommunikationseinheit (6) betreibbar ist, um die Verbindungsaufbaukommunikation auf einem Uplink-Bündelfunkbetriebsartsteuerkanal (10) zu einer Basisstation oder Bündelfunkseitensteuerung (1) zu übertragen, die in einer Bündelfunkbetriebsart zum Senden durch die Basisstation oder Bündelfunkseitensteuerung (1) an die zweite Kommunikationseinheit auf einem Downlink-Steuerkanal arbeitet, wobei die erste Kommunikationseinheit betreibbar ist, um die Verbindungsaufbaunachricht unter Verwendung einer SMS (22) oder einer dedizierten Paketdatennachricht oder einer dedizierten Direktbetriebsartverbindungsaufbaunachricht unter Verwendung eines Signalisierungsschemas des Bündelfunksystems zu übertragen, in dem die Basisstation oder Bündelfunkseitensteuerung (1) arbeitet.

14. Erste Kommunikationseinheit (6) gemäß Anspruch 13, wobei die Kommunikationseinheit ein Mobiltelefon, eine tragbare oder mobile PMR-Funkvorrichtung, ein persönlicher digitaler Assistent, ein Laptop-Computer oder ein drahtlos vernetzter PC ist.

## Revendications

1. Procédé d'établissement d'appel dans un système de communication radio offrant une communication en mode partagé (7-10) et une communication en mode direct (11), le procédé comprenant les étapes suivantes :
(i) une première unité de communication (6) envoyant une communication d'établissement d'appel à une seconde unité de communication (5) afin d'établir un appel en mode direct avec la seconde unité de communication (5) sur un canal de trafic en mode direct, et
(ii) la première unité de communication (6) et la seconde unité de communication (5) s'accordant sur le canal de trafic en mode direct (11) afin d'entrer dans l'appel en mode direct, le procédé étant **caractérisé par** :
la première unité de communication (6) transmettant la communication d'établissement d'appel sur un canal de contrôle en mode partagé de liaison montante (10) à une station de base (1) du système et la station de base transmettant la communication d'établissement d'appel sur un canal de contrôle en mode partagé de liaison descendante (9) à la seconde unité de communication, la communication d'établissement d'appel (22) étant effectuée en utilisant un message de données court ou un message de données par paquets dédié ou un message d'établissement d'appel en mode direct dédié en utilisant un schéma de signalisation du système partagé.

2. Procédé selon la revendication 1, incluant la première unité de communication envoyant la communication d'établissement d'appel lorsqu'elle fonctionne sur une périphérie de la zone de couverture de la station de base.

3. Procédé selon la revendication 1 ou la revendication 2, dans lequel l'appel en mode direct est un appel de groupe et le procédé inclut le fait que la communication d'établissement d'appel soit envoyée à une pluralité d'unités de communication appelées via la station de base.

4. Procédé selon la revendication 3, dans lequel la communication d'établissement d'appel inclut au moins un de ce qui suit :
la durée d'appel, des règles de libération d'appel, une séquence de signalisation à 5 tonalités ou l'appel sélectif numérique, des règles de transmission.

5. Procédé selon l'une quelconque des revendications précédentes, incluant la station de base à la réception de la communication d'établissement d'appel (22) sur le canal de contrôle de liaison montante envoyant un accusé de réception intermédiaire (23) sur un canal de contrôle de liaison descendante pour confirmer qu'elle a reçu avec succès la communication d'établissement d'appel et la première unité de communication étant placée dans un état d'attente dans lequel elle attend une signalisation additionnelle.

6. Procédé selon l'une quelconque des revendications précédentes, incluant (i) la seconde unité de communication (5) transmettant (25) sur un canal de contrôle de liaison montante (10) à la station de base (1) un accusé de réception comme quoi elle a reçu avec succès la communication d'établissement d'appel ; (ii) la station de base transmettant (26) l'accusé de réception (26) sur un canal de contrôle de liaison descendante à la première unité de communication (6) pour indiquer qu'un échange de signalisation a été effectué avec succès ; et (iii) la première unité de communication s'accordant sur le canal de trafic en mode direct à la réception de l'accusé de réception (26) en provenance de la station de base.

7. Procédé selon l'une quelconque des revendications précédentes, dans lequel le message de données court (22) ou le message de données par paquets ou le message d'établissement d'appel en mode direct dédié inclut une adresse de la seconde unité de communication, une commande d'établissement d'appel en mode direct, et un paramètre identifiant un canal en mode direct sélectionné.

8. Procédé selon l'une quelconque des revendications précédentes,
dans lequel la communication d'établissement d'appel est transmise conformément à un protocole de message de données court standard employé par le système radio partagé.

9. Procédé selon l'une quelconque des revendications précédentes, le procédé comprenant en outre l'étape suivante :
retourner, par les première et seconde unités de communication, en fonctionnement sur le système radio partagé lors de la libération de l'appel en mode direct.

10. Système de communication radio incluant une station de base (1), une première unité de communication (6) exploitable pour envoyer une communication d'établissement d'appel à une seconde unité de communication (5) afin d'établir un appel en mode direct avec la seconde unité de communication (5) sur un canal de trafic en mode direct et pour s'accorder sur le canal de trafic en mode direct lorsque l'appel est établi, et une seconde unité de communication exploitable pour recevoir la communication d'établissement d'appel en provenance de la première unité de communication (6) et pour s'accorder sur le canal de trafic en mode direct lorsque l'appel est établi ; et **caractérisé en ce que**
la première unité de communication (6) est exploitable pour transmettre la communication d'établissement d'appel sur un canal de contrôle en mode partagé de liaison montante (10) à la station de base (1) ; la station de base est exploitable pour transmettre la communication d'établissement d'appel sur un canal de contrôle en mode partagé de liaison descendante (9) à la seconde unité de communication, et la seconde unité de communication est exploitable pour recevoir la communication d'établissement d'appel sur le canal de contrôle en mode partagé de liaison descendante ; la première unité de communication étant exploitable pour transmettre la communication d'établissement d'appel (22) en utilisant un message de données court ou un message de données par paquets dédié ou un message d'établissement d'appel en mode direct dédié en utilisant un schéma de signalisation du système partagé.

11. Système de communication radio selon la revendication 10, dans lequel la première unité de communication est exploitable pour transmettre la communication d'établissement d'appel conformément à un protocole de message de données court standard employé par le système radio partagé.

12. Contrôleur de site de partage ou station d'émission-réception de base (1) exploitable pour recevoir une communication d'établissement d'appel en provenance d'une première unité de communication (6) sur un canal de contrôle de liaison montante et pour envoyer la communication d'établissement d'appel à une seconde unité de communication (5) sur un canal de contrôle de liaison descendante ; **caractérisé en ce que** le contrôleur de site de partage ou la station d'émission-réception de base est exploitable pour recevoir en provenance de la première unité de communication sur le canal de contrôle de liaison montante une communication d'établissement d'appel afin d'établir un appel en mode direct avec la seconde unité de communication (5) sur un canal de trafic en mode direct, la communication d'établissement d'appel utilisant un message de données court (22) ou un message de données par paquets dédié ou un message d'établissement d'appel en mode direct dédié en utilisant un schéma de signalisation du système partagé, et **en ce que** le contrôleur de site de partage ou la station d'émission-réception de base est exploitable pour envoyer la communication d'établissement d'appel à la seconde unité de communication sur un canal de contrôle de liaison descendante.

13. Première unité de communication (6) exploitable pour envoyer une communication d'établissement d'appel à une seconde unité de communication (5) afin d'établir un appel en mode direct avec la seconde unité de communication (5) sur un canal de trafic en mode direct, et exploitable pour s'accorder (45) sur le canal de trafic en mode direct (11) afin d'entrer dans l'appel en mode direct, **caractérisée en ce que :**
la première unité de communication (6) est exploitable pour transmettre la communication d'établissement d'appel sur un canal de contrôle en mode partagé de liaison montante (10) à une station de base ou à un contrôleur de site de partage (1) fonctionnant dans un mode partagé pour l'envoi par la station de base ou le contrôleur de site de partage (1) à la seconde unité de communication sur un canal de contrôle de liaison descendante, la première unité de communication étant exploitable pour transmettre la communication d'établissement d'appel en utilisant un message de données court (22) ou un message de données par paquets dédié ou un message d'établissement d'appel en mode direct dédié en utilisant un schéma de signalisation du système partagé dans lequel la station de base ou le contrôleur de site de partage (1) fonctionne.

14. Première unité de communication (6) selon la revendication 13, l'unité de communication étant un téléphone mobile, une radio PMR portable ou mobile, un assistant numérique personnel, un ordinateur portable ou un ordinateur personnel mis en réseau de manière sans fil.
